Europäisches Patentamt

European Patent Office

Office européen des brevets

(19)

(11) Publication number: 0 317 312
A2

# (12) EUROPEAN PATENT APPLICATION

(21) Application number: 88310854.0

(22) Date of filing: 17.11.88

(51) Int. Cl.⁴: **G 21 C 19/06**

(30) Priority: 19.11.87 GB 8727075

(43) Date of publication of application:
24.05.89 Bulletin 89/21

(84) Designated Contracting States:
CH DE GB IT LI NL

(71) Applicant: COSTAIN ENGINEERING LIMITED
Petrocarbon House Sharston Road
Manchester M22 4TB (GB)

Dawson, Peter trading as D.G.P. (Consulting Engineers)
Brunel House 54 Princess Street
Manchester M1 6HA (GB)

(72) Inventor: **Dobson, Peter Wardle**
2 Overhill Lane Wilmslow Park
Wilmslow Cheshire SK9 2BG (GB)

**Myall, Michael George**
The Rowans Holmes Chapel Road
Somerford Congleton CW12 4SP (GB)

**Duncan, John MacDonagh**
20 Brambling Drive
Westhaughton Bolton BL5 2SW (GB)

(74) Representative: **McCulloch, Norman Little et al**
Mathys & Squire 10 Fleet Street
London EC4Y 1AY (GB)

(54) **Store for radioactive material.**

(57) A store for radioactive material housed in transportable stillages comprises a walled structure providing cells closed at the top thereof by floor slabs which are removable to provide access openings for the stillages. The stillages are a close sliding fit in vertical guide rails on the side walls of the cells. The cells are arranged in parallel rows and the side walls of each row of cells are fitted with rails for a carriage for transporting the stillages. The carriage comprises a shield hood fitted with separate lifting mechanisms for a floor slab and a stillage, the shield hood being large enough to span two adjacent floor slabs of a cell and to accommodate a floor slab and a stillage side by side. The walls, floor slabs and shield hood have shielding properties sufficient to prevent escape of radiation therethrough, and the lower edge of the shield hood is spaced with small clearance from the top surfaces of the floor slabs and cell walls. The structure is designed to maintain its integrity under a seismic load not less than that equivalent to a horizontal ground acceleration of 0.25g.

FIG. 1

EP 0 317 312 A2

**Description**

This invention relates to the storage of radioactive material, and is concerned more particularly with the storage in a dry environment of Intermediate Level radioactive waste material, that is waste material as defined in the Layfield Report on Sizewell B Power Station, Volume 3, Chapter 41, with levels of activity exceeding the limits for Low Level Waste but not requiring the heat generated by radioactive decay to be taken into account in the design of storage facilities. The radioactive waste material may be housed in sealed containers, or the waste material may consist of equipment or apparatus which has been made radioactive.

One object of the invention is to provide an improved construction of store which is particularly adapted to maintain its integrity when subjected to a seismic event.

A further object of the invention is to provide a store having improved handling facilities to reduce the risk of impact damage in the event of a load being dropped and to provide a cost effective design.

Another object of the invention is to provide an improved arrangement for shielding the radioactive material against escape of radiation during handling of the material.

According to the present invention there is provided a store for radioactive waste material housed in transportable stillages, the store comprising boundary walls defining the periphery of the store and internal walls dividing the interior of the store and co-operating with the boundary walls to form a cellular structure providing a plurality of cells each adapted to house a plurality of stillages therein, the cells being closed at the top thereof by floor slabs which are removable to provide access openings for passage of stillages to be stored in or removed from a cell, and the cells being provided with guide means for guiding the stillages during movement into and out of the cells, the walls and floor slabs having shielding properties sufficient to prevent escape of radiation therethrough from the material in the stillages in the cells, and the guide means restricting relative lateral movement between the stillages and the walls of the cells to avoid enhancement of loading in the event of seismic disturbance.

The cellular construction of the store is particularly well adapted to resist seismic loading and can conveniently be designed to resist a seismic event not less than that equivalent to a horizontal ground acceleration of 0.25g.

A plurality of cross beams are preferably spaced apart across the upper portion of each cell with the ends of the cross beams embedded in the side walls of the cell adjacent the top thereof, the side walls of the cell formed with a ledge at the level of the top surface of the cross beams, and the floor slabs each formed with a downwardly facing shoulder extending around the full periphery of the floor slab, the shoulders at the ends of the floor slab overlying the ledges on the side walls of the cell and the shoulders at the sides of the floor slab overlying the adjacent cross beams.

A carriage for gripping and lifting the floor slabs and stillages is preferably mounted on the side walls of the cells for movement along the cells. The carriage can conveniently comprise a shield hood of a size to span two adjacent floor slabs of a cell with the lower edge of the hood spaced with small clearance from the top surfaces of the side walls and floor slabs, the shield hood also being of a size to accommodate a floor slab and a stillage side by side within the hood, and the hood having shielding properties sufficient to prevent escape of radiation therethrough from material in a stillage within the hood or through an access opening spanned by the hood and provided by the lifting of a floor slab into the hood.

In a preferred construction, the side walls of each cell are fitted with upright corbels, and each stillage is of a size to be a loose sliding fit between opposing or adjacent corbels during the lowering or raising of a stillage in the cell. Each stillage may be fitted with cam elements engageable with co-operating cam elements of an underlying stillage, the cam elements being arranged to exert a side thrust on the overlying stillage when forced together by the weight of the overlying stillage whereby the stillage is locked against one or more of the corbels. The cam elements can conveniently be inclined surfaces on the underside of each stillage engageable with corresponding inclined surfaces on the top of each stillage. In another construction, the cam elements comprise part-spherical feet on the underside of each stillage engageable with corresponding part-spherical supports on the top of each stillage. The corbels preferably have side surfaces which taper towards one another in the direction away from the associated side wall of the cell.

An embodiment of the invention will now be described, by way of example, with reference to the accompanying drawings, in which:

Figure 1 is an isometric representation from above of a building complex incorporating two main stores for radioactive waste material housed in drums supported on stillages, with parts of the building complex cut away to illustrate details of construction,

Figure 2 is a cross sectional front elevation of a carriage and part of the cellular structure of a main store, showing the carriage supporting a stillage and a floor slab, and

Figure 3 is a cross sectional side elevation of the carriage and the part of the cellular structure shown in Figure 2.

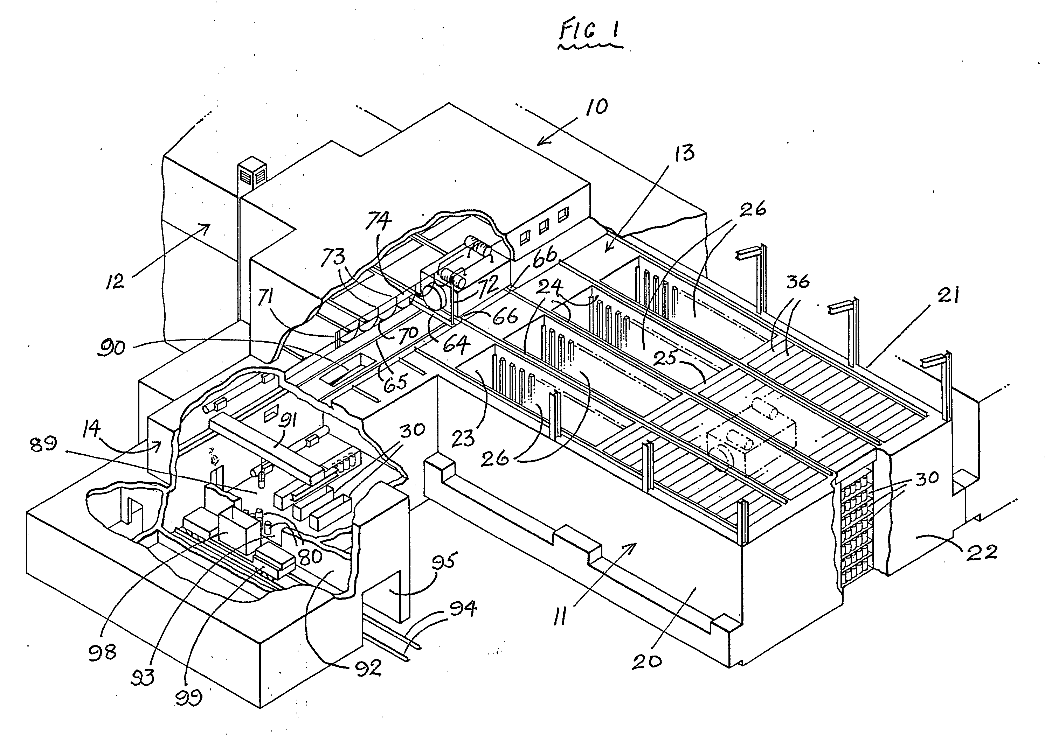

Referring to Figure 1, the building complex comprises a central control section 10, two similar main stores 11, 12 arranged at the front and rear respectively of the control section, a service section 13 between the control section and the front main store 11, and a reception section 14 at one end of the service section.

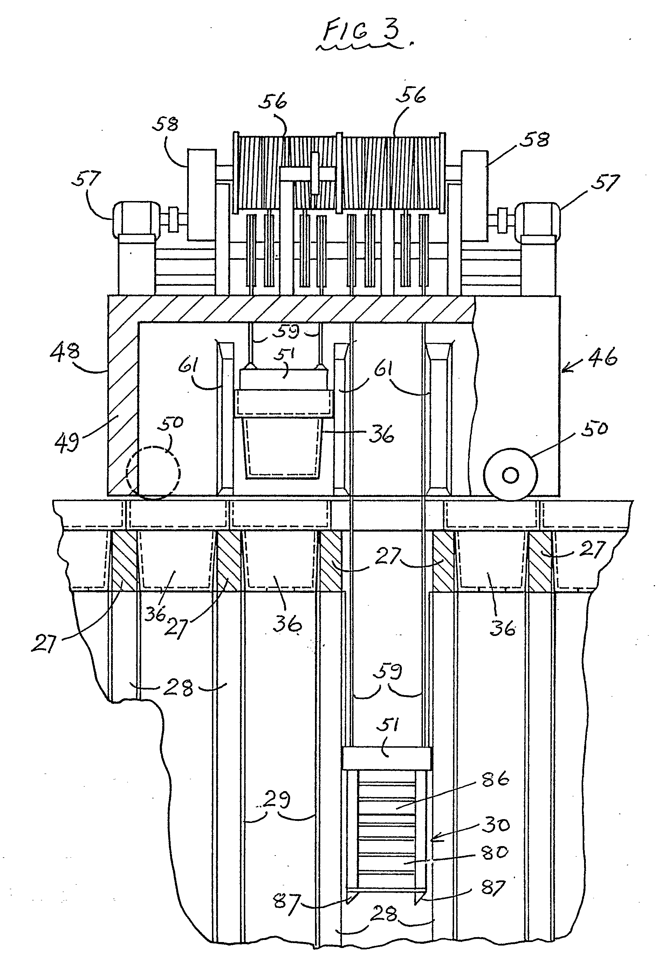

The main store 11 comprises a rectangular structure consisting of two external side walls 20, 21, a front wall 22, a rear wall 23, three internal longitudinal walls 24 extending between the front and rear walls, and an internal cross wall 25 extending between the side walls 20, 21, the walls co-operating to form a rectangular cellular structure providing eight cells 26 of similar dimensions open at the top. Cross beams 27 (Figure 3) extend across the open top of each cell at equally spaced intervals along the cell, the cross beams being mounted on the side walls of the cell above corbels 28, with the upper surfaces of the cross beams spaced a short distance below the top of the side walls for a purpose explained hereinafter. The corbels have a transverse cross section in the shape of a trapezium with side surfaces 29 which taper towards one another in the direction away from the associated wall. The corbels 28 extend down to the floor of the cell and serve as guide rails for stillages 30 as hereinafter described.

The walls 20-25, cross beams 27 and corbels 28 are designed to have a strength such that the complete cellular structure would maintain its integrity if subjected to a seismic loading of 0.25g ground acceleration. The walls are also designed to have the necessary thickness to prevent escape of radiation from the radioactive material to be stored. The corbels are preferably pre-cast and each wall formed of pre-cast curtain walling spaced apart, the corbels being located in position with reinforcement from the corbels extending through apertures in the walling and into the spaces between the walling before the infill is poured between the walling. This method of construction enables the corbels to be located in position with a high degree of accuracy. Alternatively, the walls may be constructed using pre-formed steel shuttering panels.

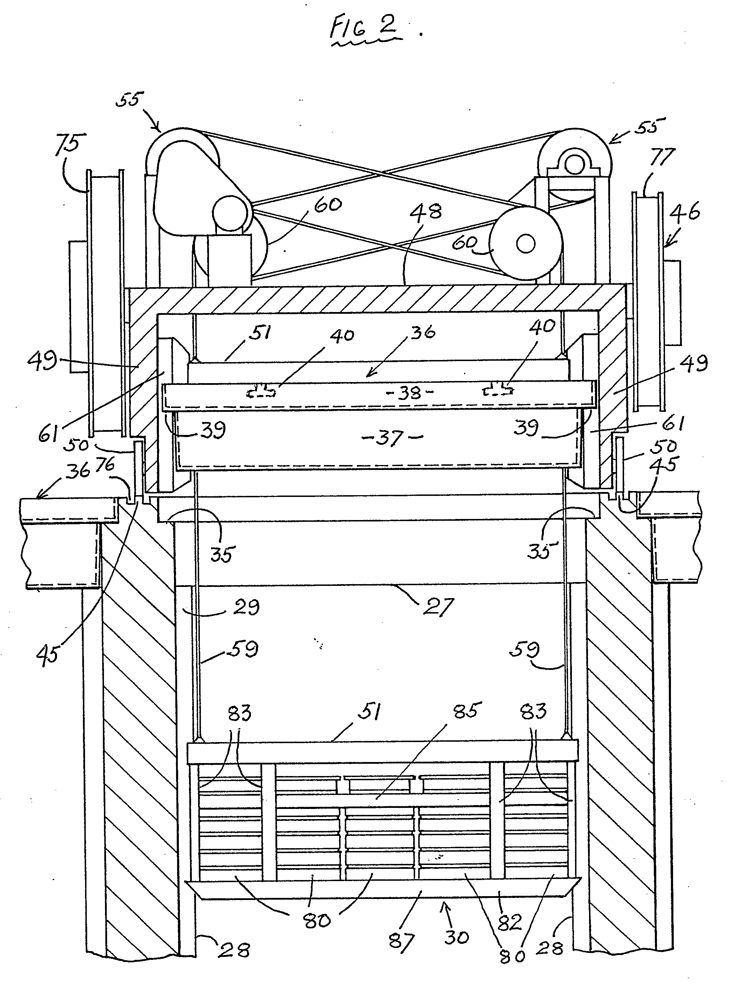

The tops of the side walls of each cell are cut away to form ledges 35 (Figure 2) at the level of the top surfaces of the cross beams 27, the ledges 35 providing a support for floor slabs 36 which close off the top of the cell. Each floor slab 36 comprises an elongated beam having a body portion 37 and a head portion 38 which co-operates with the body portion to form a downwardly facing shoulder 39 extending around the full periphery of the floor slab. The shoulders at the ends of the floor slab rest on the ledges 35 on the side walls, and the shoulders along the length of the floor slab overlie the adjacent cross beams 27, with the body portion 37 forming a plug between the adjacent cross beams. The side surfaces of the body portion taper inwardly in the downwards direction as shown in Figure 3 to facilitate entry of the body portion between the cross beams when the floor slab is being lowered into position. Each floor slab is made of reinforced concrete encased in sheet metal, and has the thickness necessary to prevent escape of radiation from the radioactive material to be stored in the cells. Each floor slab, and the ledges on the side walls of the cells, are also dimensioned so that the top of the floor slabs, when resting on the ledges, are flush with the top of the side walls of the cells.

Packing may be interposed between the shoulders 39 on the floor slabs and the ledges 35 and cross beams 27. Four sockets 40 are embedded in the top of each floor slab, the sockets being adapted to engage with keys on lifting mechanism as hereinafter described.

The top of each of the external walls 20, 21 and the internal walls 24 are fitted with a rail 45 for a carriage 46 for transporting stillages 30, each rail being located in a groove in the top of the wall with the top surface of the rail flush with the top surface of the wall.

The carriage 46 comprises a chassis in the form of a hood 48, the side walls 49 of which are fitted with wheels 50 adapted to run on the rails 45 on the side walls of a cell, with the lower edge surface of the hood spaced close to the top surfaces of the side walls and floor slabs of the cell. The hood is of a size to span at least two adjacent floor slabs on a cell and to accommodate two lifting frames 51, a stillage 30 attached to one of the lifting frames, and a floor slab 36 attached to the other lifting frame. The hood is made of steel and has the thickness necessary to act as a shield to prevent escape therethrough of radiation from radioactive material in a stillage accommodated in the hood or of radiation passing through an access opening in the floor slabs spanned by the hood. The hood may however be made of any other suitable material, for example concrete.

Two separate winding mechanisms 55 for raising and lowering a stillage 30 and a floor slab 36 are mounted on the hood 48. Each winding mechanism comprises a drum 56 (Figure 3) driven by an electric motor 57 through reduction gearing 58, and four cables 59 wound around the drum and connected to one of the lifting frames 51, each cable extending around pulleys 60 and through apertures in the hood. The winding mechanism can be of any suitable construction known in the art and is therefore not described in detail. Each lifting frame 51 is adapted to engage flat against the top of either a floor slab or a stillage, and is provided with locking keys (not shown) adapted to engage in the sockets 40 in a floor slab, or in corresponding sockets (not shown) on the top of a stillage, the keys being adapted to be turned within the sockets into a locking position in a manner well known in the art. The side walls of the hood 48 are fitted on the inside with guide rails 61 for locating a stillage or floor slab within the hood during movement of the carriage.

A trolley 64 (Figure 1) for moving the carriage 46 between different rows of cells in the main store is mounted on rails 65 extending along the roof of the service section to the rear of the store 11, and also extending over the roof of the reception section. The trolley is fitted with a pair of rails 66 which are arranged parallel to the rails 45 and with a gauge equal to that of the two rails 45 on each side of a row of cells of the main store, the trolley being movable to align the rails 66 with the rails 45 of any selected row of cells for movement of the carriage onto the trolley. The trolley is driven by an electric motor (not shown).

Electric power is supplied to the carriage 46 and the trolley 64 by a cable 70 connected to an electric terminal 71 adjacent one end of the path of travel of the trolley. The cable is secured intermediate its ends to the top of a guide post 72 on one end of the trolley, with the portion of the cable between the terminal 71 and the post 72 suspended in loops from hangers 73 which are movable along a rail 74 extending along the path of travel of the trolley at the rear thereof. The other portion of the cable is wound around a drum 75 (Figure 2) rotatably mounted on one side of the hood 48 on the carriage. When the carriage is mounted on the trolley, movement of the trolley along its rails causes the hangers 73 to slide along the rail 74 to accommodate the cable to the varying distance between the terminal 71 and the trolley. When the trolley is positioned with the rails 66 thereon aligned with the rails 45 on the side walls of a cell and the carriage is driven off the rails 66 and onto the rails 45, the cable unwinds from the drum 75 and extends down a channel on the front of the guide post 72 and along a channel 76 (Figure 2) in the top surface of one of the side walls of the cell. The drum 75 is preferably rotated by a motor in synchronism with movement of the carriage along the rails 45.

Another cable system (not shown) similar to that used for the power cable 70 is provided for supply of control signals to the carriage. The terminal for the signals cable is at the opposite end of the path of travel of the trolley from the power terminal, and the signals cable is wound onto a drum 77 rotatably mounted on the opposite side of the hood of the carriage to that fitted with the drum 75. In this way, the signals cable is kept spaced apart from the power cable.

The cable systems may however be of any suitable construction and arrangement for supplying electric power and control signals to the carriage 46 and trolley 64. For example the cable systems incorporating drums for storage of the cables as shown between the carriage and the trolley may be replaced by cable systems incorporating hangers movable along rails with the cables suspended in loops between the hangers as shown in the drawings between the trolley 64 and the electric terminal 71.

Each stillage 30 is an open-topped metal basket of rectangular configuration designed to hold five cylindrical drums 80 arranged on end and in line with one another, the stillage comprising a rectangular base frame 82, upright side members 83, and horizontal side members 85 and end members 86 extending between the upright side members 83. The upper surface of the frame 82 may be formed with five conical depressions adapted to receive the bottoms of the drums 80 as a close fit. The upper part of the stillage is fitted with four sockets (not shown) for engagement with the locking keys on a lifting frame 51. The stillage is of a size such that it can pass freely through the space left in the roof of a cell by removal of a floor slab 36, but is nevertheless a close sliding fit between the four corbels 28 underlying that open space. Each cell is provided with supports (not shown) for the lowermost stillage and each stillage is designed to rest upon an underlying stillage in a cell, the underside of the base of each stillage being fitted with inclined deflector plates 87 arranged to engage the top of the underlying stillage and thereby displace the upper stillage to one side of the underlying stillage. The upper stillage is thus subjected to a sideways thrust and forced against two of the four corbels between which it is mounted. The stillages are preferably arranged so that the deflector plates in successive stillages stacked one on another urge their respective stillages in opposite directions.

Instead of fitting the stillages with deflector plates 87, each stillage may be fitted with four part-spherical ball supports on the top of the stillage and with four part-spherical ball feet on the underside of the stillage, the ball feet being directly below the ball supports. Upon mounting the stillages one upon another, the part-spherical ball feet on each stillage will engage the ball supports of the underlying stillage. The ball feet will slide on the surface of the ball supports and thereby cause the two stillages to be forced in opposite directions into engagement with the adjacent corbels.

The stillages shown in the drawings are each designed to hold five cylindrical drums arranged in line in an upright position. Each stillage can of course be designed to hold any desired number and arrangement of drums or containers, or any items of equipment or apparatus which are radioactive, provided that the drums or items are held securely within the frame of the stillage.

The reception section 14 comprises a cave area 89 within a building having walls and a roof with shielding properties to prevent escape of radiation from the radioactive waste material to be stored. The path of travel of the trolley 64 extends across an access opening 90 in the roof of the cave area, the access opening 90 being closed by a roof plug (not shown) identical to the floor slabs 36 on the cells. The cave area 89 serves as a small buffer store for drums 80 and stillages 30 and is provided with an overhead crane 91. One wall 92 of the cave area has an opening 93 fitted with a shield door (not shown). A rail track 94 extends into the building through a screened entrance 95, the rail track extending alongside the wall 92 and the shield door.

Alternative arrangement of equipment in the reception section 14 adapted for receipt and transfer of drums to the cave handling system will be obvious to those skilled in the art.

In operation of the embodiment described, drums filled with radioactive waste material are transported to the store in a flask 98 on a rail wagon 99 which is shunted through the entrance 95 and positioned alongside the shield door closing the opening 93 in the wall of the cave area 89. The entrance 95 is then closed by a screen, the shield door opened, the lid on the flask 98 removed by a hoist mechanism (not shown), and the drums removed from the flask and deposited in the cave area. The shield door is then closed, the drums deposited by the crane 91 in an empty stillage, and the filled stillage positioned directly below the access opening 90. The carriage 46 is driven onto the rails 66 on the trolley 64, and the trolley moved to a position in which one of the lifting frames 51 on the carriage is directly above the roof plug in the access opening 90. The lifting frame 51 is lowered onto the roof plug with the locking keys engaged in the sockets in the roof plug, and the lifting frame together with the roof plug raised into the hood on the carriage. The carriage is then moved along the rails 66 on the trolley to a position in which the second lifting frame 51 is directly over the access opening 90. The second lifting frame 51 is then lowered through the opening 90 and onto the top of the filled stillage, with the locking keys on the lifting frame engaged in the sockets on the stillage. The lifting frame 51 together with the stillage is then lifted through the opening 90 and into the hood on the carriage. The carriage is then moved back to its first position with the roof plug directly over the access opening. The roof plug is then lowered into the opening 90, the locking keys released from the sockets, and the lifting frame lifted back into the hood. The trolley 64, together with the carriage 46 and the filled stillage within the hood, is then moved to a position in which the rails 66 are aligned with the rails 45 on the side walls of the cell in which the stillage is to be deposited. The carriage is then driven off the trolley and along the rails 45 to a position in which the free lifting frame 51 is above the floor slab in the part of the cell in which the stillage is to be stored. The free lifting frame 51 is lowered onto the floor slab with the locking keys engaged in the sockets, the lifting frame together with the floor slab lifted into the hood to leave an opening in the floor, the carriage moved to a position in which the stillage is above the opening in the floor, the lifting frame and stillage lowered into the cell and onto any underlying stillage, the lifting frame released from the stillage and raised into the hood, the carriage moved back into the position in which the floor slab is above the opening, and the floor slab lowered into the opening in the floor.

During the movements of the carriage as described above, the lower edge of the hood 48 is spaced with small clearance from the planar surface formed by the top surfaces of the floor slabs and walls of the store so as to prevent or at least reduce to a minimum escape of radiation from material in a stillage within the hood or through an access opening spanned by the hood and provided by the lifting of a floor slab into the hood.

The cells in the main stores 11 are ventilated by suction fans arranged to extract air and pass the air through filters (not shown). The filters are preferably housed in a cave area below the path of travel of the trolley so that the carriage 46 can be used to replace or service the filters by a similar method as described above for handling stillages.

## Claims

1. A store for radioactive waste material housed in transportable stillages, the store comprising boundary walls defining the periphery of the store and internal walls subdividing the interior of the store and co-operating with the boundary walls to form a cellular structure providing a plurality of cells each adapted to house a plurality of stillages therein, the cells being closed at the top thereof by floor slabs which are removable to provide access openings for passage of stillages to be stored in or removed from a cell, and the cells being provided with guide means for guiding the stillages during movement into and out of the cells, the walls and floor slabs having shielding properties sufficient to prevent escape of radiation therethrough from the material in the stillages in the cells, and the guide means restricting relative lateral movement between the stillages and the walls of the cells to avoid enhancement of loading in the event of seismic disturbance.

2. A store as claimed in Claim 1, wherein a plurality of cross beams are spaced apart across the upper portion of each cell.

3. A store as claimed in claim 2, wherein the ends of the cross beams of each cell are embedded in the side walls of the cell adjacent the top thereof, the side walls of the cell are formed with a ledge at the level of the top surface of the cross beams, and the floor slabs are each formed with a downwardly facing shoulder extending around the full periphery of the floor slab, the shoulders at the ends of the floor slab overlying the ledges on the side walls of the cell and the shoulders at the sides of the floor slab overlying the adjacent cross beams.

4. A store as claimed in claim 3, wherein the lower portion of each floor slab is shaped to provide a tapered "lead-in" and is a close fit between the adjacent cross beams.

5. A store as claimed in any of claims 1-4, wherein the walls have a strength such that the cellular structure would maintain its integrity under a seismic loading not less than that equivalent to a horizontal ground acceleration of 0.25g.

6. A store as claimed in any of claims 1-5, wherein said guide means comprise upright corbels fitted to the side walls of each cell, each stillage being of a size to be a sliding fit between opposing or adjacent corbels during the lowering or raising of a stillage in the cell, and the corbels restraining lateral movement of the stillages when located in position in the cells.

7. A store as claimed in claim 6 including a plurality of said stillages deposited in cells of the cellular structure, wherein in each cell containing stillages, the lowermost stillage is mounted on supports in the cell and each other stillage rests upon the underlying stillage.

8. A store as claimed in claim 7, wherein each stillage is provided with cam elements adapted to engage the underlying stillage, the cam elements being arranged so that the upper stillage is displaced to one side of the underlying stillage and forced against the corbels on a side wall of the associated cell.

9. A store as claimed in claim 8, wherein the cam elements comprise part-spherical feet or inclined surfaces on the underside of each stillage engageable with corresponding part-spherical supports or inclined surfaces on the top of each stillage.

10. A store as claimed in claim 8 or 9, wherein the corbels have side surfaces which taper towards one another in the direction away from the associated side wall of the cell.

11. A store as claimed in any of claims 1-10 and provided with a carriage fitted with mechanism for gripping and lifting a floor slab and a stillage, wherein the carriage is mounted on the side walls of the cells for movement along the cells.

12. A store as claimed in claim 11, wherein the carriage comprises a shield hood of a size to span two adjacent floor slabs of a cell with the lower edge of the hood spaced with small clearance from the side walls and/or adjacent floor slabs and to accommodate a floor slab and a stillage side by side within the hood, the hood having shielding properties sufficient to prevent escape of radiation therethrough from material in a stillage within the hood or through an access opening spanned by the hood and provided by the lifting of a floor slab into the hood.

13. A store as claimed in claim 12 wherein the shield hood forms a chassis for the carriage, the mechanism for lifting a floor slab and a stillage comprising power driven drums and cables mounted on the shield hood.

14. A store as claimed in claim 12 or 13, wherein the cells are arranged in parallel rows, the walls defining the sides of the cells are fitted at the top thereof with rails, the carriage is fitted with wheels arranged to run along the rails, and a transfer trolley is mounted on rails along one end wall of the cellular structure, the transfer trolley having rails for support of the carriage and being movable to align the rails thereon with the rails on the side walls of a cell, whereby the carriage carrying the shield hood may be transferred from the rails extending along one row of cells onto the rails extending along another row of cells.

15. A store as claimed in claim 14, including a reception section comprising a cave area within a building having walls and a roof with shielding properties to prevent escape of radiation therethrough from radioative waste material in the cave area, wherein the roof of the cave area has an opening closed by a roof plug which is removable to provide an access opening for passage of one of said stillages, and rails for said transfer trolley extend over the roof of the reception area to enable the carriage to be transported to a position for removing a stillage from the cave area through the access opening therefor.

16. A store as claimed in claim 14 or 15 including cable systems for supplying power and control signals to the mechanism on the carriage for gripping and lifting a floor slab and a stillage, the cable systems having cables extending between the carriage and the transfer trolley, further cables extending between the transfer trolley and sources of power and control signals adjacent the path of travel of the transfer trolley, and storage means for storing excess lengths of the cables when the cable systems are not fully extended.

17. A store as claimed in any of claims 1-10 including a reception section comprising a cave area within a building having walls and a roof with shielding properties to prevent escape of radiation therethrough from radioactive waste material in the cave area, the cave area including means for lifting containers of radioactive waste material onto and off a stillage in the cave area, and the roof of the cave area having an opening closed by a roof plug which is removable to provide an access opening for passage of a stillage, and a carriage for transferring a stillage from said access opening in the roof of the cave area to an access opening for a cell formed by removal of one of its floor slabs, the carriage having a compartment of a size to house a floor slab and a stillage, and mechanism for gripping and lifting a floor slab and a stillage into said compartment, and the walls of the carriage having shielding properties sufficient to prevent escape of radiation therethrough from waste material in a stillage in said compartment in the carriage.

FIG 1

FIG 2 .

EP 0 317 312 A2

FIG 3.